# EUROPÄISCHE PATENTANMELDUNG

(11) **EP 0 905 527 A1**
(43) Veröffentlichungstag der Anmeldung: **31.03.1999**
(21) Anmeldenummer: 98114154.2
(22) Anmeldetag: 29.07.1998
(51) Int. Cl.: G01S 7/537, G01S 7/52

(54) **Vorrichtung zum Nachbilden eines schallreflektierenden Wasserfahrzeuges**

(30) Priorität: 04.09.1997 DE 19738688
(71) Anmelder: STN ATLAS Elektronik GmbH, 28309 Bremen (DE)
(72) Erfinder: Harten, Georg, 28307 Bremen (DE)

(57) **Zusammenfassung**

Eine Vorrichtung zum Nachbilden eines schallreflektierenden Wasserfahrzeugs dient als Kunstziel zur Täuschung oder Erprobung von Sonarortungsanlagen. Ein Empfangshydrophon empfängt den anschließend als Reflektorsignal von einer Abstrahlanordnung abgestrahlten Schall. Zur Vermeidung einer akustischen Rückkopplung sind Empfangshydrophon und Abstrahlanordnung räumlich getrennt im Wasser mit einem vorgebbaren Abstand angeordnet und elektrisch verbunden. Die Ausbreitungsdämpfung des abgestrahlten Schalls über den Abstand bis hin zum Empfangshydrophon verhindert eine Rückkopplung, auch wenn ungerichtet Schall als Reflektorsignal abgestrahlt wird.

## Beschreibung

Die Erfindung betrifft eine Vorrichtung zum Nachbilden eines schallreflektierenden Wasserfahrzeugs der im Oberbegriff des Anspruchs 1 genannten Art.

Schallreflektierende Fahrzeuge werden in der Wasserschalltechnik nachgebildet, um als sogenanntes Kunstziel oder Störer andere Ortungsanlagen zu täuschen und einen Angriff von einem zu schützenden Oberflächenschiff oder U-Boot abzulenken und zu verhindern. Kunstziele werden auch zur Vermessung und zum Nachweis der Qualität aktiver Sonar-Ortungsanlagen verwendet, wobei von der Sonar-Ortungsanlage Schallimpulse abgestrahlt werden und vom Kunstziel reflektierte oder zurückgesendete Anteile empfangen und zur Ortsbestimmung des Kunstziels ausgewertet werden.

Aus der US Patentschrift 3 956 729 ist ein Kunstziel für ein zu schützendes Schiff bekannt, das zum Täuschen einer Ortungsanlage mit Korrelationsempfang eingesetzt wird. Das Kunstziel empfängt mit einem Empfangshydrophon das Schiffsgeräusch des zu schützenden Schiffs und strahlt es verstärkt sowohl unmittelbar nach dem Empfang, als auch um eine Zeit verzögert mit einer Abstrahlanordnung ab. Um eine Rückkopplung zwischen Abstrahlanordnung und Empfangshydrophon zu vermeiden, wird Schall von der Abstrahlanordnung gerichtet abgestrahlt, so daß das Empfangshydrophon ungestört nur das Schiffsgeräusch des zu schützenden Schiffs empfängt. Die Abstrahlanordnung weist eine Vielzahl von Sendehydrophonen auf, um eine Bündelung des ausgesendeten Schalls zu erzielen.

Es ist Aufgabe der vorliegenden Erfindung eine Vorrichtung der im Oberbegriff des Anspruchs 1 genannten Art zu schaffen, bei der keine Rückkopplungseffekte auftreten, auch wenn die Abstrahlanordnung ungerichtet Schall abstrahlt.

Diese Aufgabe wird erfindungsgemäß durch die im kennzeichnenden Teil des Anpruchs 1 genannten Merkmale gelöst.

Das zu schützende Schiff bzw. die zu erprobende Sonar-Ortunganlage, die Sendeimpulse abstrahlt, befindet sich in einer Entfernung zum Träger mit der Abstrahlvorrichtung. In einem vorgebbaren Abstand dazu ist das Empfangshydrophon im Wasser installiert und mit der Abstrahlvorrichtung elektrisch verbunden. Das Empfangshydrophon und der Träger sind beispielsweise an Bojen installiert oder werden vom Erprobungsschiff nachgeschleppt. Das Empfangshydrophon empfängt den vom Schiff abgestrahlten Schall. Sein Empfangssignal wird ohne Zeitverzögerung an die Abstrahlanordnung elektrisch übertragen und nach einer entsprechenden Verstärkung gesendet. Der abgestrahlte Schall breitet sich im Wasser aus und wird durch das Wasser auch zu dem im Abstand angeordneten Empfangshydrophon übertragen. Abhängig von diesem Abstand erfährt der Schall eine Dämpfung, die bei einem Abstand von z.B. 10m 20 Db beträgt. Der Abstand bestimmt die Dämpfung und wird so gewählt, daß keine Rückkopplungseffekte auftreten. Der Vorteil der erfindungsgemäßen Vorrichtung nach Anspruch 1 besteht darin, daß unmittelbar nach Empfang das Empfangsignal wieder ausgesendet wird, daß auf dem Träger mit der Abstrahlvorrichtung außer einer Energieversorgung und einem Verstärker ein einziger Schallsendewandler installiert wird, der gemäß der vorteilhaften Weiterbildung nach Anspruch 2 aus einem einzigen Sendehydrophon mit Rundumcharakteristik besteht. Richtungsbildner oder bestimmte Einbaumaßnahmen des Schallsendewandlers auf dem Träger mit spezieller Justage und Einhalten von Einbautolleranzen sind nicht notwendig. Der Vorteil der erfindungsgemäßen Vorrichtung nach Anspruch 2 besteht darin, daß sie einen Reflektor für Schall nachbildet, der bei Schalleinfall aus beliebiger Richtung gleiches Reflektionsverhalten aufweist.

Die erfindungsgemäße Vorrichtung bildet ein Kunstziel, dessen Zielmaß durch die Verstärkercharakteristik des Verstärkers einstellbar ist. Für Erprobungen einer Sonarortungsanlage, die Sendeimpulse abstrahlt und von einem Wasserfahrzeug reflektierte Schallwellen zum Bestimmmen seiner Zieldaten - Entfernung, Kurs und Geschwindigkeit - empfängt, erhält der Träger für die Abstrahlvorrichtung gemäß der vorteilhaften Weiterbildung der erfindungsgemäßen Vorrichtung nach Anspruch 3 eine strömungsgünstige Form und wird zusammen mit dem Empfangshydrophon entweder nachgeschleppt oder mit einem Antrieb versehen. Die elektrische Leitung, die das Empfangshydrophon mit der Abstrahlvorrichtung verbindet, wird als Schleppkabel ausgebildet. Das Empfangshydrophon empfängt die Schallimpulse, die nach Verstärkung vom Sendeschallwandler als Reflektionssignal abgestrahlt werden.

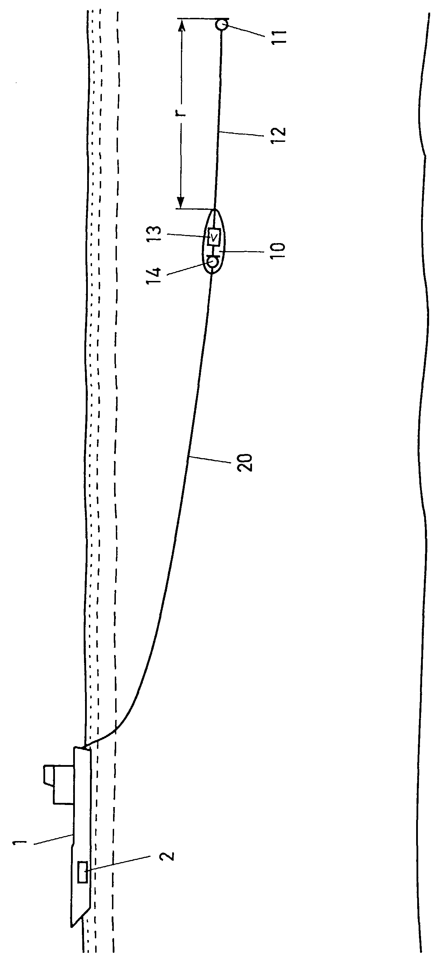

Die Erfindung ist in einem in der Zeichnung dargestellten Ausführungsbeispiel für eine Vorrichtung zum Nachbilden eines schallrefklektierenden Wasserfahrzeugs näher beschrieben.

Von einem Erprobungsschiff 1 mit einer aktiven Sonarortungsanlage 2 wird ein Kunstziel nachgeschleppt, das aus einem Träger 10 für eine Abstrahlanordnung und einem Empfangshydrophon 11 besteht. Zwischen dem Träger 10 und dem Empfangshydrophon 11 liegt ein Abstand r. Das Empfangshydrophon 11 ist über ein Schleppkabel 12 mit einem Verstärker 13 elektrisch verbunden, der auf dem Träger 10 installiert ist. Die Verstärkercharakteristik des Verstärkers 13 ist einstellbar. Der Verstärker 13 speist einen Schallsendewandler 14 mit dem verstärkten Empfangssignal des Empfangshydrophons 11. Die Sonarortungsanlage 2 auf dem Erprobungsschiff 1 sendet einen Sendeimpuls aus, der vom Empfangshydrophon 11 empfangen wird und unmittelbar danach vom Schallsendewandler 14 nach Verstärkung als Reflektorsignal abgestrahlt wird. Die Verstärkung des Verstärkers 13 bildet das Zielmaß eines zu ortenden U-Bootes nach. Der Abstand r ist so dimensioniert, daß der vom Schallsendewandler 14 abgestrahlte Schall gemäß dem Dämpfungsgesetz 20 log r so gedämpft wird, daß sich keine Rückkopplung zwischen Empfangshydrophon 11 und Schallsendewandler 14 einstellt. Der Abstand r beträgt beispielsweise 20 m. Die sich einstellende Ausbreitungsdämpfung beträgt dann 26 Db. Das vom Schallsendewandler 14 abgestrahlte Reflektorsignal enthält den Sendeimpuls und das überlagerte Fahrgeräusch des Erprobungsschiffs und auch sämtliche anderen Umgebungsgeräusche, die das Empfangshydrophon 11 empfängt und spiegelt somit realitätsnah eine von einem U-Boot reflektierten Sendeimpuls wider. Statt einer Schleppverbindung 20 zwischen Erprobungsschiff 1 und Träger 10 kann der Träger 10 mit einem Antrieb ausgestattet sein und jede andere Position zum Erprobungsschiff 1 einnehmen. Der Träger 10 weist eine strömungsgünstige Form auf, damit sein Wasserwiderstand möglichst gering ist. Der Schallsendewandler 14 weist eine Rundumcharakteristik auf und besteht aus einem einzigen Sendehydrophon.

## Patentansprüche

1. Vorrichtung zum Nachbilden eines schallreflektierenden Wasserfahrzeugs mit einem Empfangshydrophon und einer Abstrahlanordnung, dadurch gekennzeichnet, daß das Empfangshydrophon (11) und ein Träger (10) für die Abstrahlanordnung in einem Abstand (r) über eine Wasserstrecke räumlich getrennt im Wasser angeordnet und elektrisch verbunden sind und daß der Abstand (r) abhängig von der Schall-Ausbreitungsdämpfung längs der Wasserstrecke vorgebbar ist.

2. Vorrichtung nach Anspruch 1, dadurch gekennzeichnet, daß die Abstrahlanordnung einen Schallsendewandler (14) mit Rundumcharakteristik aufweist.

3. Vorrichtung nach Anspruch 1 oder 2, dadurch gekennzeichnet, daß die Form des Trägers (10) strömungsgünstig ausgelegt ist.

4. Vorrichtung nach einem der Ansprüche 1 - 3, dadurch gekennzeichnet, daß der Träger (10) einen Antrieb aufweist.
